# EUROPÄISCHE PATENTSCHRIFT

(11) **EP 2 867 563 B1**
(45) Veröffentlichungstag und Bekanntmachung des Hinweises auf die Patenterteilung: **27.04.2016**
(21) Anmeldenummer: 13723740.0
(22) Anmeldetag: 14.05.2013
(51) Int. Cl.: F16H 61/22

(54) **SCHALTHEBELVORRICHTUNG ZUR BETÄTIGUNG EINES FAHRZEUGGETRIEBES**
SHIFTING LEVER DEVICE FOR ACTUATING A VEHICLE GEARBOX
DISPOSITIF DE LEVIER DE CHANGEMENT DE VITESSE POUR ACTIONNER UNE BOÎTE DE VITESSES DE VÉHICULE

(30) Priorität: 29.06.2012 DE 102012211309
(43) Veröffentlichungstag der Anmeldung: 06.05.2015
(73) Patentinhaber: ZF Friedrichshafen AG, 88046 Friedrichshafen (DE)
(72) Erfinder: RAKE, Ludger, 49439 Steinfeld (DE); GIEFER, Andreas, 49448 Lemfoerde (DE); HARTRAMPF, Ralf, 49419 Wagenfeld (DE)
(86) Internationale Anmeldenummer: PCT/EP2013/059883
(87) Internationale Veröffentlichungsnummer: WO 2014/000945

(56) Entgegenhaltungen:
- WO-A1-93/24771
- DE-A1-102007 019 468
- US-A- 4 966 262
- US-A1- 2011 174 106

## Beschreibung

Die Erfindung betrifft eine Schalthebelvorrichtung zur Betätigung eines Fahrzeuggetriebes, mit einer Halterung, einem an der Halterung bewegbar gelagerten und in vorgegebene Schalthebelstellungen bewegbaren Schalthebel, die eine erste Schalthebelstellungen umfassen, einem in vorgegebene Sperrelementstellungen bewegbaren Sperrelement, die eine erste Sperrelementstellung umfassen, in welcher der Schalthebel in der ersten Schalthebelstellungen mittels des Sperrelements mit der Halterung verriegelbar ist, und einer Freigabeeinrichtung, die einen magnetfeldempfindlichen Schalter und einen Magneten als Komponenten umfasst, deren Abstand zueinander durch Bewegen des Sperrelements variierbar ist, sodass in der ersten Schalthebelstellungen des Schalthebels der Schalter durch das Magnetfeld des Magneten in der ersten Sperrelementstellung des Sperrelements schaltbar ist. Eine solche Schalthebelvorrichtung ist beispielsweise aus der Druckschrift WO 93/24771 A1 bekannt.

Derartige Schalthebelvorrichtungen umfassen im Falle eines Automatikgetriebes z.B. die Schalthebelstellungen P, R, N und D, wobei P einen Parkzustand, R einen Rückwärtsfahrbetrieb, N einen Neutralzustand und D einen Vorwärtsfahrbetrieb kennzeichnet. Das Zündschloss des Fahrzeugs umfasst in der Regel eine Zündschlüsselverriegelung, mittels welcher der Zündschlüssel mit dem Zündschloss verriegelbar ist, sodass ein Abziehen des Zündschlüssels von dem Zündschloss in bestimmten Schalthebelstellungen verhindert werden kann. Um im verriegelten Zustand des Schalthebels in der Schalthebelstellung P den Zündschlüssel zum Abziehen freizugeben, wird ein beispielsweise als Reedkontakt ausgebildeter magnetfeldempfindlicher Schalter, der mit der Zündschlüsselverriegelung gekoppelt ist, über die Annäherung eines Permanentmagneten im Sperrelement aktiviert, sodass die Zündschlüsselverriegelung den Zündschlüssel zum Abziehen freigibt. Da ein Verriegeln des Schalthebels aber auch in der Schalthebelstellung N möglich ist, kann sich der Permanentmagnet in dieser Schalthebelstellung ebenfalls in einer Position befinden, in welcher der Reedkontakt geschaltet wird. Dies hat zur Folge, dass in der Schalthebelstellung N der Zündschlüssel abgezogen werden kann, was unerwünscht ist Bisher wird zur Lösung dieses Problems der aktuelle Schaltzustand des Reedkontakts mit der aktuellen Schalthebelstellung des Schalthebels auf elektronischem

Wege logisch verknüpft, sodass eine Freigabe des Zündschlüssels nur dann erfolgt, wenn der Reedkontakt geschaltet ist und der Schalthebel die Schalthebelstellung P angenommen hat. Diese Lösung ist aber mit dem Nachteil verbunden, dass zu dem Zeitpunkt, zu dem diese Verknüpfung zu erfolgen hat, häufig keine Spannungsversorgung zum Durchführen der Verknüpfung zur Verfügung steht. Alternativ kann die gewünschte Funktionalität auch durch zusätzliche mechanische Elemente, wie z. B. Hebel, erzielt werden. Dies hat aber zur Folge, dass zum Betätigen des Sperrelements ein höherer Kraftaufwand erforderlich ist, was zu einer erhöhten Stromaufnahme und zu einem größeren Bauraumbedarf der Stelleinrichtung führt, mittels welcher das Sperrelement bewegbar ist.

Ausgehend hiervon liegt der Erfindung die Aufgabe zugrunde, eine Schalthebelvorrichtung der eingangs genannten Art derart weiterzubilden, dass das zuvor geschilderte Problem lösbar ist, ohne den Kraftaufwand zum Betätigen des Sperrelements zu erhöhen und ohne die aktuelle Schalthebelstellung des Schalthebels mit dem aktuellen Schaltzustand des Schalters auf elektronischem Wege logisch verknüpfen zu müssen.

Diese Aufgabe wird durch eine Schalthebelvorrichtung nach Anspruch 1 gelöst. Bevorzugte Weiterbildungen der Schalthebelvorrichtung sind in den Unteransprüchen und in der nachfolgenden Beschreibung gegeben.

Die Schalthebelvorrichtung zur Betätigung eines Fahrzeuggetriebes weist eine Halterung, einen an der Halterung bewegbar gelagerten und in vorgegebene Schalthebelstellungen bewegbaren Schalthebel, die eine erste Schalthebelstellung umfassen, ein in vorgegebene Sperrelementstellungen bewegbares Sperrelement, die eine erste Sperrelementstellung umfassen, in welcher der Schalthebel in der ersten Schalthebelstellung mittels des Sperrelements mit der Halterung verriegelbar ist, eine Freigabeeinrichtung, die einen magnetfeldempfindlichen Schalter und einen Magneten als Komponenten umfasst, deren Abstand zueinander durch Bewegen des Sperrelements derart variierbar ist, dass in der ersten Schalthebelstellung des Schalthebels der Schalter durch das Magnetfeld des Magneten in der ersten Sperrelementstellung des Sperrelements schaltbar ist, und wenigstens ein zwischen dem Magneten und dem Schalter wenigstens manuell oder automatisch positionierbares und aus dieser Position verbringbares Abschirmelement auf, mittels welchem, insbesondere in der ersten Sperrelementstellung des Sperrelements, der Schalter von dem Magnetfeld des Magneten in wenigstens einer anderen oder in jeder anderen Schalthebelstellung der vorgegebenen Schalthebelstellungen des Schalthebels abschirmbar ist.

Durch das Abschirmelement ist es auf einfache Weise möglich, ein Schalten des Schalters zu unterbinden, indem das Abschirmelement zwischen dem Magneten und dem Schalter positioniert wird. Dies trifft insbesondere für die erste Sperrelementstellung des Sperrelements zu, da der Magnet selbst dann nicht mit dem Schalter magnetisch in Wechselwirkung treten kann, wenn er in enger räumlicher Nähe zu diesem positioniert ist. Dabei sind keine zusätzlichen Hebel erforderlich, die den Kraftaufwand zum Betätigen des Sperrelements erhöhen würden. Ferner ist keine elektronische Verknüpfung der aktuellen Schalthebelstellung mit dem aktuellen Schaltzustand des Schalters erforderlich.

Des Weiteren ist es auf einfache Weise möglich, ein Schalten des Schalters wieder freizugeben, indem das Abschirmelement aus der Position zwischen dem Magneten und dem Schalter verbringbar ist und dadurch das Magnetfeld des Magneten nicht weiter abschirmt. Dies trifft insbesondere für die erste Sperrelementstellung des Sperrelementes wenigstens in der ersten Schalthebelstellung des Schalthebels zu, damit der Magnet mit dem Schalter in Wechselwirkung treten kann, wenn er in enger räumlicher Nähe zu diesem positioniert ist. Vorzugsweise trifft dies gleichfalls für die erste Sperrelementstellung des Sperrelementes in wenigstens einer anderen oder in jeder anderen Schalthebelstellung der vorgegebenen Schalthebelstellungen zu. Damit kann ein Schalten des Schalters in wenigstens einer oder den anderen Schalthebelstellungen, insbesondere im Rahmen einer Notentriegelung, in welcher ein Schalten des Schalters erforderlich ist, freigegeben bzw. ermöglicht werden.

Vorzugsweise ist das Abschirmelement mit dem Schalthebel über Seilzüge oder eine starre Verbindung oder eine ähnliche Einrichtung derart mechanisch gekoppelt, dass das Abschirmelement durch Bewegen des Schalthebels zwischen dem Magneten und dem Schalter positionierbar und aus dieser Position heraus verbringbar ist. Beispielsweise kann das Abschirmelement durch Bewegen des Schalthebels von der ersten in eine andere Schalthebelstellung derart mitgenommen oder bewegt werden, dass das Abschirmelement automatisch zwischen dem Magneten und dem Schalter in einer der anderen Schalthebelstellungen positioniert wird. Durch Bewegen des Schalthebels in die erste Schalthebelstellung kann das Abschirmelement automatisch aus der Position zwischen dem Magneten und dem Schalter heraus, vorzugsweise in die Ursprungsposition, verbracht bzw. rückgestellt werden.

Alternativ oder zusätzlich ist das Abschirmelement vorzugsweise mit dem Schalthebel derart elektronisch gekoppelt, dass das Abschirmelement durch Bewegen des Schalthebels von einer Schalthebelstellung in eine andere Schalthebelstellung wie vorbeschrieben bedarfsgerecht zwischen dem Magneten und dem Schalter positionierbar oder aus dieser Position heraus verbringbar ist. Beispielsweise kann das Abschirmelement über wenigstens einen Aktuator bewegt bzw. mitgenommen werden, welcher mit dem Schalthebel derart elektronisch gekoppelt ist, dass der Aktuator das Abschirmelement in Abhängigkeit der Schaltbewegung bedarfsgerecht zwischen dem Magneten und dem Schalter positioniert oder aus dieser Position heraus verbringt.

Die vorbeschriebenen bevorzugten Ausführungsformen der vorliegenden Erfindung zeigen beispielhaft das diesen bevorzugten Ausführungsformen zugrundeliegende Prinzip, dass das wenigstens eine Abschirmelement, insbesondere bedarfsgerecht in einer oder mehreren Schalthebelstellungen, durch Bewegen bzw. in Abhängigkeit eines Bewegens des Schalthebels zwischen dem Magneten und dem Schalter automatisch positionierbar und aus dieser Position automatisch verbringbar ist.

Darüber hinaus ist es bevorzugt, dass das Abschirmelement alternativ oder zusätzlich manuell zwischen dem Magneten und dem Schalter positionierbar und manuell aus dieser Position verbringbar ist. Beispielsweise kann das Abschirmelement mit einer Betätigungseinrichtung wie zum Beispiel einer Notentriegelungseinrichtung mechanisch oder elektronisch wie beispielhaft vorbeschrieben gekoppelt sein. Mittels der Betätigungseinrichtung kann das Abschirmelement benutzergesteuert bzw. manuell, also unabhängig von einer Schalthebelbewegung in wenigstens eine der vorbeschriebenen Positionen verbracht werden. Dies kann beispielsweise dann notwendig sein, wenn sich das Abschirmelement nicht automatisch in eine der jeweiligen Schalthebelstellung zugeordnete Position bewegt. Dies könnte beispielsweise dann der Fall sein, wenn sich der Schalthebel in einer anderen als der ersten Schalthebelstellung befindet und nicht in die erste Schalthebelstellung zurückstellbar ist, wodurch ein Schalten des Schalters in der anderen Schalthebelstellung erforderlich sein könnte. Denkbar wäre auch, dass das Abschirmelement vorzugsweise in der ersten Schalthebelstellung aus der Position zwischen dem Magneten und dem Schalter manuell zu verbringen ist.

Das Abschirmelement besteht bevorzugt aus Magnetwerkstoff, insbesondere aus einem ferromagnetischen Material, welches sich vorzugsweise durch eine hohe magnetische Permeabilität und eine geringe magnetische Remanenz auszeichnet. Das Abschirmelement kann auch als magnetisches Abschirmelement bezeichnet werden. Insbesondere ist das Abschirmelement als Blech ausgebildet. Beispielsweise ist das Abschirmelement an der Halterung vorgesehen und/oder fest, insbesondere starr, mit dieser verbunden. Bevorzugt ist das Abschirmelement aber an dem Schalthebel vorgesehen und/oder fest, insbesondere starr, mit diesem verbunden. Insbesondere ist das Abschirmelement mittels des Schalthebels relativ zu der Halterung bewegbar.

Das Sperrelement ist bevorzugt in zwei vorgegebene Sperrelementstellungen bewegbar, welche die erste Sperrelementstellung und eine zweite Sperrelementstellung umfassen, in welcher der Schalthebel in der ersten Schalthebelstellung insbesondere nicht mit der Halterung verriegelt ist. In der zweiten Sperrelementstellung wird somit ein Schalthebelstellungswechsel aus der ersten Schalthebelstellung heraus nicht durch das Sperrelement verhindert. Insbesondere ist der Schalter in der zweiten Sperrelementstellung nicht durch das Magnetfeld des Magneten schaltbar. Bevorzugt weist der Magnet in der zweiten Sperrelementstellung des Sperrelements einen derart großen Abstand zu dem Schalter auf, dass das Magnetfeld am Ort des Schalters zum Schalten des Schalters zu schwach ist. In der ersten Sperrelementstellung ist der Schalter vorzugsweise stets durch das Magnetfeld des Magneten schaltbar, sofern der Schalter nicht durch das Abschirmelement von dem Magnetfeld des Magneten abgeschirmt wird. Bevorzugt weist der Magnet in der ersten Sperrelementstellung des Sperrelements einen derart geringen Abstand zu dem Schalter auf, dass der Schalter durch das Magnetfeld des Magneten geschaltet wird, sofern das Abschirmelement nicht zwischen dem Schalter und dem Magneten angeordnet ist.

Gemäß einer bevorzugten Ausgestaltung umfassen die Schalthebelstellungen eine, wenigstens eine oder mehrere verriegelbare Schalthebelstellungen, welche insbesondere die erste Schalthebelstellung umfassen. Beispielsweise ist die eine oder die wenigstens eine verriegelbare Schalthebelstellung durch die erste Schalthebelstellung gebildet. Bevorzugt ist in jeder der verriegelbaren Schalthebelstellungen der Schalthebel mittels des Sperrelements mit der Halterung verriegelbar. Die andere oder wenigstens eine andere der Schalthebelstellungen ist oder umfasst vorzugsweise die oder eine der verriegelbaren Schalthebelstellungen.

Bevorzugt ist eine, wenigstens eine oder sind mehrere Verriegelungsausnehmungen vorgesehen, wobei das Sperrelement in jede der Verriegelungsausnehmungen einrückbar ist. Insbesondere ist den verriegelbaren Schalthebelstellungen jeweils eine der Verriegelungsausnehmungen zugeordnet. In einer verriegelnden Sperrelementstellung ist das Sperrelement insbesondere in eine der Verriegelungsausnehmungen eingerückt. In einer freigebenden Sperrelementstellung ist das Sperrelement insbesondere in keine der Verriegelungsausnehmungen eingerückt. Die Verriegelungsausnehmungen sind beispielsweise in der Halterung oder in einem mit dieser fest, insbesondere starr, verbundenen Körper vorgesehen. Bevorzugt sind die Verriegelungsausnehmungen aber in dem Schalthebel oder in einem Verriegelungskörper vorgesehen, der mit dem Schalthebel in Mitnahmeverbindung steht und/oder mit dem Schalthebel fest, insbesondere starr, verbunden und/oder einstückig ausgebildet ist. Beispielsweise ist der Schalthebel mittels des Verriegelungskörpers bewegbar an der Halterung gelagert. Die Verriegelungsausnehmungen können auf unterschiedlichen Seiten des Sperrelements liegen. Somit ist es z. B. möglich, den Schalthebel in einer oder wenigstens einer anderen der Schalthebelstellungen mit dem Sperrelement in der zweiten Sperrelementstellung zu verriegeln.

Gemäß einer bevorzugten Weiterbildung ist eine Stelleinrichtung vorgesehen, mittels welcher das Sperrelement in die unterschiedlichen Sperrelementstellungen bewegbar, beispielsweise zwischen den Sperrelementstellungen hin und her bewegbar, ist. Bevorzugt ist das Sperrelement mittels der Stelleinrichtung in die erste Sperrelementstellung und in die zweite Sperrelementstellung bewegbar. Die Stelleinrichtung ist vorzugsweise elektrisch betätigbar. Insbesondere umfasst die Stelleinrichtung einen Elektromagneten, mittels welchem das Sperrelement bewegbar ist, welches hierzu bevorzugt zumindest bereichsweise aus Magnetwerkstoff besteht oder mechanisch mit einem zumindest bereichsweise aus Magnetwerkstoff bestehenden Betätigungsglied gekoppelt ist. Vorteilhaft liegt das Sperrelement verschiebbar in dem Elektromagneten ein. Das Sperrelement bildet somit einen in dem Elektromagneten einliegenden Anker oder Stößel. Beispielsweise ist das Sperrelement an oder in dem Stellelement bewegbar, insbesondere verschiebbar, geführt und/oder gelagert. Vorteilhaft ist das Sperrelement mittels einer Feder in die erste Sperrelementstellung vorgespannt. Dies hat den Vorteil, dass bei einem Stromausfall und/oder in einem unbestromten Zustand des Elektromagneten der Schalthebel automatisch verriegelt wird, sobald dieser die erste Schalthebelstellung annimmt. Insbesondere ist das Stellelement in der ersten Sperrelementstellung zumindest teilweise aus dem Elektromagneten herausgeführt, vorzugsweise mittels der Feder. Durch Bestromen des Elektromagneten kann das Sperrelement, insbesondere gegen die Kraft der Feder, in die zweite Sperrelementstellung bewegt werden. Vorteilhaft wird das Sperrelement dabei in den Elektromagneten hineingezogen und/oder auf der gegenüberliegenden Seite aus dem Elektromagneten herausgeführt. Die Stelleinrichtung bildet zusammen mit dem Sperrelement bevorzugt einen Zugmagneten. Vorzugsweise umfasst die Stelleinrichtung die Feder.

Das Sperrelement kann an dem Schalthebel vorgesehen und/oder bewegbar an diesem gelagert sein, vorzugsweise unter Zwischenschaltung oder mittels der Stelleinrichtung. Bevorzugt ist das Sperrelement aber an der Halterung vorgesehen und/oder bewegbar an dieser gelagert, vorzugsweise unter Zwischenschaltung oder mittels der Stelleinrichtung. Die Stelleinrichtung kann an dem Schalthebel vorgesehen und/oder fest, insbesondere starr, mit diesem verbunden sein. Bevorzugt ist die Stelleinrichtung aber an der Halterung vorgesehen und/oder fest, insbesondere starr, mit dieser verbunden. Somit kann vermieden werden, elektrische Versorgungs- und/oder Steuerleitungen für das Stellelement über bewegliche Teile zu führen.

Die Freigabeeinrichtung kann an dem Schalthebel vorgesehen und/oder fest mit diesem verbunden sein. Bevorzugt ist die Freigabeeinrichtung aber an der Halterung vorgesehen und/oder fest mit dieser verbunden. Der Schalter kann an dem Sperrelement vorgesehen und/oder fest, insbesondere starr, mit diesem verbunden sein. Bevorzugt ist der Schalter aber an der Halterung vorgesehen und/oder fest, insbesondere starr, mit dieser verbunden. Somit ist es vermeidbar, an den Schalter angeschlossene elektrische Leitungen über bewegliche Teile zu führen. Bevorzugt ist der Schalter allein durch das Magnetfeld des Magneten schaltbar, sodass insbesondere keine Stromversorgung zum Schalten des Schalters erforderlich ist. Insbesondere ist der Schalter als Reedkontakt ausgebildet. Der Magnet kann an der Halterung vorgesehen und/oder fest, insbesondere starr, mit dieser verbunden sein. Bevorzugt ist der Magnet aber an dem Sperrelement vorgesehen und/oder fest, insbesondere starr, mit diesem verbunden. Beispielsweise ist der Magnet an oder im Bereich einer Stirnseite des Sperrelements angeordnet, die insbesondere dem Schalter zugewandt ist. Ferner kann das Sperrelement den Magneten bilden. Insbesondere ist der Magnet als Permanentmagnet ausgebildet. Dies bietet den Vorteil, dass keine elektrischen Leitungen für den Magneten erforderlich sind.

Der Schalter kann im magnetfeldfreien Zustand geschlossen sein. In diesem Fall bedeutet der Ausdruck "schalten", dass der Schalter durch das Magnetfeld des Magneten geöffnet wird. Bevorzugt ist der Schalter im magnetfeldfreien Zustand aber geöffnet, sodass der Ausdruck "schalten" bedeutet, dass der Schalter durch das Magnetfeld des Magneten geschlossen wird. Alternativ ist es möglich, dass der Schalter im magnetfeldfreien Zustand wahlweise geschlossen oder geöffnet ist und durch das Magnetfeld des Magneten umgeschaltet wird.

Gemäß einer bevorzugten Weiterbildung ist das Abschirmelement, insbesondere durch Bewegen des Schalthebels, in mehreren der Schalthebelstellungen, insbesondere in mehreren der verriegelbaren Schalthebelstellungen, zwischen dem Magneten und dem Schalter positionierbar. Bevorzugt ist in diesen Schalthebelstellungen des Schalthebels, insbesondere in diesen verriegelbaren Schalthebelstellungen des Schalthebels, der Schalter von dem Magnetfeld des Magneten mittels des Abschirmelements abschirmbar. Vorteilhaft bilden oder umfassen diese mehreren Schalthebelstellungen mehrere der verriegelbaren Schalthebelstellungen.

Bevorzugt ist das Abschirmelement über mehrere der Schalthebelstellungen durchgängig ausgebildet. Ferner ist es möglich, mehrere Abschirmelemente vorzusehen, denen jeweils eine oder mehrere der Schalthebelstellungen zugeordnet sind, in denen der Schalter von dem Magnetfeld des Magneten abzuschirmen ist. Insbesondere ist durch Bewegen des Schalthebels jedes der Abschirmelemente zwischen dem Magneten und dem Schalter in der oder den jeweils zugeordneten Schalthebelstellungen des Schalthebels positionierbar. Vorteilhaft ist durch jedes der Abschirmelemente der Schalter von dem Magnetfeld des Magneten in der oder den jeweils zugeordneten Schalthebelstellungen des Schalthebels abschirmbar. Beispielsweise ist die oder sind die zugeordneten Schalthebelstellungen verriegelbare Schalthebelstellungen. Die Abschirmelemente können z. B. starr miteinander verbunden und/oder relativ zueinander ortsfest sein.

Bevorzugt ist der Schalter in der ersten Schalthebelstellung des Schalthebels durch das Magnetfeld des Magneten in der ersten Sperrelementstellung des Sperrelements schaltbar. Insbesondere wird in der ersten Schalthebelstellung des Schalthebels der Schalter in der ersten Sperrelementstellung des Sperrelements nicht durch das Abschirmelement von dem Magnetfeld abgeschirmt. Die erste Schalthebelstellung bildet bevorzugt eine Endstellung bezüglich des Bewegungswegs des Schalthebels. Insbesondere ist das Abschirmelement derart ausgebildet und/oder angeordnet, dass es in der ersten Schalthebelstellung des Schalthebels nicht zwischen dem Magneten und dem Schalter positioniert ist. Somit ist es möglich, in der ersten Schalthebelstellung des Schalthebels den Schalter durch das Magnetfeld des Magneten in der ersten Sperrelementstellung des Sperrelements zu schalten. Vorteilhaft ist das Abschirmelement derart ausgebildet und/oder angeordnet, dass es zumindest in einer der ersten Schalthebelstellung benachbarten Schalthebelstellung des Schalthebels zwischen dem Magneten und dem Schalter positioniert ist.

Bevorzugt ist der Schalter in mehreren der Schalthebelstellungen des Schalthebels durch das Magnetfeld des Magneten in der ersten Sperrelementstellung des Sperrelements schaltbar. Beispielsweise bilden diese Schalthebelstellungen jeweils eine der verriegelbaren Schalthebelstellungen. Insbesondere ist in diesen Schalthebelstellungen des Schalthebels der Schalter nicht mittels des Abschirmelements von dem Magnetfeld des Magneten abschirmbar. Diese mehreren Schalthebelstellungen umfassen insbesondere die erste Schalthebelstellung. Somit ist es möglich, den Zündschlüssel in mehreren der Schalthebelstellungen zum Abziehen freizugeben.

Gemäß einer bevorzugten Ausgestaltung umfasst das Abschirmelement wenigstens einen, für das Magnetfeld des Magneten durchlässigen Bereich, der insbesondere einer der Schalthebelstellungen zugeordnet ist. Somit ist es möglich, in dieser Schalthebelstellung des Schalthebels den Schalter durch das Magnetfeld des Magneten in der ersten Sperrelementstellung des Sperrelements zu schalten. Dies ist insbesondere dann sinnvoll, wenn diese Schalthebelstellung keine Endstellung bezüglich des Bewegungswegs des Schalthebels bildet. Beispielsweise ist diese Schalthebelstellung durch eine der verriegelbaren Schalthebelstellungen gebildet. Vorteilhaft ist der für das Magnetfeld des Magneten durchlässige Bereich als in dem Abschirmelement vorgesehenes Durchgangsloch ausgebildet.

Der für das Magnetfeld des Magneten durchlässige Bereich des Abschirmelements kann der ersten Schalthebelstellung zugeordnet sein. Bevorzugt ist der für das Magnetfeld des Magneten durchlässige Bereich des Abschirmelements aber einer weiteren der Schalthebelstellungen zugeordnet. Beispielsweise ist die weitere Schalthebelstellung durch eine der verriegelbaren Schalthebelstellungen gebildet. Vorteilhaft bildet die weitere Schalthebelstellung keine Endstellung bezüglich des Bewegungswegs des Schalthebels. Insbesondere ist die weitere Schalthebelstellung zusätzlich zu der ersten Schalthebelstellung vorgesehen. Somit ist es möglich, in mehreren der Schalthebelstellungen des Schalthebels den Schalter durch das Magnetfeld des Magneten in der ersten Sperrelementstellung des Sperrelements zu schalten.

Bevorzugt umfassen die Schalthebelstellungen wenigstens eine nicht verriegelbare Schalthebelstellung, in welcher der Schalthebel nicht mittels des Sperrelements mit der Halterung verriegelbar ist. Insbesondere umfassen die Schalthebelstellungen mehrere nicht verriegelbare Schalthebelstellungen, in denen der Schalthebel nicht mittels des Sperrelements mit der Halterung verriegelbar ist. Die, eine oder wenigstens eine der nicht verriegelbaren Schalthebelstellungen kann zwischen oder neben zwei der verriegelbaren Schalthebelstellungen angeordnet sein. Bevorzugt ist das Abschirmelement, insbesondere durch Bewegen des Schalthebels, in einer oder mehreren der verriegelbaren Schalthebelstellungen und/oder in einer oder mehreren der nicht verriegelbaren Schalthebelstellungen zwischen dem Magneten und dem Schalter positionierbar. Ferner kann das Abschirmelement über mehrere der Schalthebelstellungen durchgängig ausgebildet sein, was Fertigungsvorteile bietet.

Gemäß einer bevorzugten Weiterbildung ist ein Zündschloss mit Zündschlüsselverriegelung vorgesehen, die mittels der Freigabeeinrichtung freigebbar ist. Die Freigabevorrichtung kann somit auch als Zündschlüsselfreigabeeinrichtung bezeichnet werden. Das Zündschloss und/oder die Zündschlüsselverriegelung ist insbesondere mit der Freigabeeinrichtung gekoppelt, vorzugsweise elektrisch gekoppelt. Bevorzugt wird die Zündschlüsselverriegelung freigegeben, wenn der Schalter durch das Magnetfeld des Magneten geschaltet wird. Mittels der Zündschlüsselverriegelung ist insbesondere ein Zündschlüssel mit dem Zündschloss verriegelbar. In einem verriegelnden Zustand der Zündschlüsselverriegelung ist der Zündschlüssel mit dem Zündschloss verriegelt. In einem freigegebenen Zustand der Zündschlüsselverriegelung ist der Zündschlüssel von dem Zündschloss abziehbar.

Der Schalthebel ist insbesondere durch manuelle Betätigung in die unterschiedlichen Schalthebelstellungen bewegbar. Bevorzugt ist der Schalthebel verschiebbar oder schwenkbar an der Halterung gelagert. Die bewegbare Lagerung des Schalthebels an der Halterung kann unmittelbar oder mittelbar erfolgen. Vorzugsweise ist der Schalthebel fest, insbesondere starr, mit einem Trägerkörper verbunden, mittels welchem der Schalthebel bewegbar an der Halterung gelagert ist. Bevorzugt bildet der Trägerkörper den Verriegelungskörper. Ist der Schalthebel relativ zu der Halterung verschiebbar, bildet der Trägerkörper vorzugsweise einen Schlitten, der insbesondere verschiebbar an der Halterung gelagert ist.

Die Schalthebelvorrichtung, insbesondere der Schalthebel, ist bevorzugt mit dem oder einem Fahrzeuggetriebe und/oder mit einem Getriebesteuergerät des Getriebes gekoppelt. Diese Kopplung erfolgt beispielsweise mechanisch oder elektronisch. Vorzugsweise ist das Getriebe und/oder das Getriebesteuergerät mittels der Schalthebelvorrichtung, insbesondere mittels des Schalthebels, betätigbar. Das Getriebe ist insbesondere ein Automatikgetriebe.

Die Erfindung betrifft ferner ein Kraftfahrzeug mit dem Fahrzeuggetriebe und der Schalthebelvorrichtung. Vorteilhaft umfasst das Fahrzeug auch das Zündschloss. Insbesondere umfasst das Fahrzeug einen Fahrzeugaufbau, mit welchem die Halterung fest, vorzugsweise starr, verbunden ist. Bei dem Fahrzeug handelt es sich insbesondere um einen Kraftwagen.

Die Erfindung wird nachfolgend anhand einer bevorzugten Ausführungsform unter Bezugnahme auf die Zeichnung beschrieben. In der Zeichnung zeigen:
- Fig. 1: eine schematische Draufsicht auf eine Schalthebelvorrichtung gemäß einer Ausführungsform, wobei der Schalthebel in eine verriegelbare Schalthebelstellung gestellt, aber nicht verriegelt ist,
- Fig. 2: die Draufsicht nach Fig. 1, wobei der Schalthebel verriegelt ist,
- Fig. 3: eine schematische Draufsicht auf die Schalthebelvorrichtung gemäß der Ausführungsform, wobei der Schalthebel in eine andere verriegelbare Schalthebelstellung gestellt und in dieser verriegelt ist,
- Fig. 4: die Draufsicht nach Fig. 3, wobei der Schalthebel nicht verriegelt ist,
- Fig. 5: eine schematische Darstellung eines Abschirmelements gemäß einer Abwandlung der Ausführungsform und
- Fig. 6: eine schematische Draufsicht auf ein Kraftfahrzeug mit der Schalthebelvorrichtung gemäß der Ausführungsform.

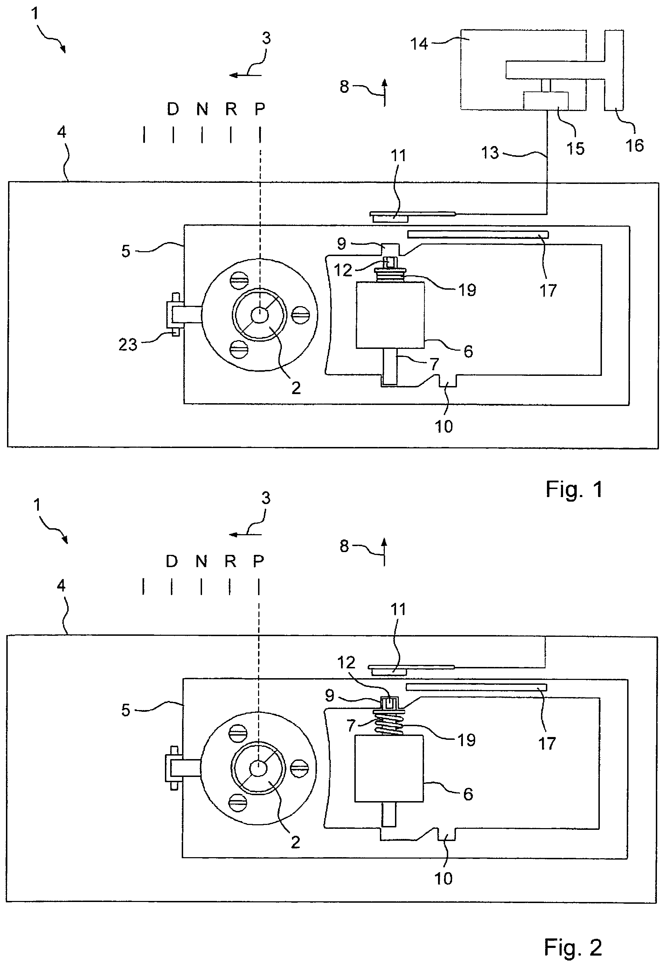

Aus den Fig. 1 bis 4 sind unterschiedliche Darstellungen einer Schalthebelvorrichtung 1 gemäß einer Ausführungsform ersichtlich, wobei ein Schalthebel 2 in einer Schaltrichtung 3 bewegbar, insbesondere verschiebbar oder schwenkbar, an einer Halterung 4 gelagert und relativ zu dieser in vorgegebene Schalthebelstellungen P, R, N und D bewegbar ist. Gemäß der Fig. 1 und 2 ist der Schalthebel 2 in die Schalthebelstellung P gestellt. Der Schalthebel 2 ist starr mit einem Körper 5 verbunden und mittels diesem in Schaltrichtung 3 bewegbar an der Halterung 4 gelagert. Dabei bildet der Körper 5 einen Träger (Trägerkörper) für den Schalthebel 2 und ist bevorzugt mit diesem verschraubt. Es ist aber auch möglich, den Schalthebel 2 auf andere Weise mit dem Körper 5 zu verbinden oder den Körper 5 und den Schalthebel 2 einstückig auszubilden. Ferner ist es möglich, den Schalthebel 2 unabhängig von dem Körper 5 bewegbar an der Halterung 4 zu lagern. Bevorzugt steht der Körper 5 aber in Mitnahmeverbindung mit dem Schalthebel 2. Ist der Schalthebel 2 relativ zu der Halterung 4 verschiebbar, ist der Körper 5 beispielsweise als Schlitten ausgebildet, der in Schaltrichtung 3 verschiebbar an der Halterung 4 gelagert ist.

An der Halterung 4 ist eine Stelleinrichtung 6 in Form eines Elektromagneten starr festgelegt, in dem ein Sperrelement 7 in einer Sperrrichtung 8 verschiebbar einliegt, welches bereichsweise aus ferromagnetischem Material besteht und somit einen bewegbaren Anker des Elektromagneten 6 bildet. Die Sperrrichtung 8 verläuft insbesondere quer zur Schaltrichtung 3. Das Sperrelement 7 ist mittels einer Feder 19 in Sperrrichtung 8 vorgespannt und wird durch die Magnetkraft des bestromten Elektromagneten 6 entgegen der Kraft der Feder 19 in seiner aus Fig. 1 ersichtlichen Stellung gehalten, die als zweite Sperrelementstellung bezeichnet wird. Die Stelleinrichtung 6 bildet zusammen mit dem Sperrelement 7 insbesondere einen Zugmagneten. Im unbestromten Zustand des Elektromagneten drängt die Feder 19 das Sperrelement 7 in eine erste Sperrelementstellung, die aus Fig. 2 ersichtlich ist.

In dem Körper 5 ist eine Verriegelungsausnehmung 9 vorgesehen, in welche das Sperrelement 7 im unbestromten Zustand des Elektromagneten 6 in der Schalthebelstellung P des Schalthebels 2 einrücken kann. Ist das Sperrelement 7 in die Verriegelungsausnehmung 9 eingerückt, ist der Schalthebel 2 mit der Halterung 4 verriegelt, was aus Fig. 2 ersichtlich ist. Die Schalthebelstellung P bildet somit eine verriegelbare Schalthebelstellung des Schalthebels 2. Ferner weist der Körper 5 wenigstens eine zweite Verriegelungsausnehmung 10 auf, die der Schalthebelstellung N zugeordnet ist. Im Bereich der Verriegelungsausnehmung 9 verläuft der Körper 5 zwischen der Stelleinrichtung 6 und einem als Reedkontakt ausgebildeten magnetfeldempfindlichen Schalter 11, der starr an der Halterung 4 festgelegt ist. Ferner ist in einem dem Schalter 11 zugewandten, stirnseitigen Endbereich des Sperrelements 7 ein Permanentmagnet 12 angeordnet und starr an dem Sperrelement 7 festgelegt. In der aus Fig. 2 ersichtlichen, verriegelnden Sperrelementstellung des Sperrelements 7 ist der Magnet 12 derart nah an den Schalter 11 herangebracht, dass dieser in einem zum Schalten ausreichenden Maße von dem Magnetfeld des Magneten 12 durchflutet wird und somit geschaltet, d.h. geschlossen ist. Der Schalter 11 ist über elektrische Leitungen 13 mit einem Zündschloss 14 verbunden, welches eine Zündschlüsselverriegelung 15 umfasst, mittels welcher ein Zündschlüssel 16 mit dem Zündschloss 14 verriegelbar ist. Ist der Schalter 11 geöffnet, so ist der Zündschlüssel 16 mit dem Zündschloss 14 verriegelt. Ist der Schalter 11 hingegen geschlossen, so gibt die Zündschlüsselverriegelung 15 den Zündschlüssel 6 frei, der somit von dem Zündschloss 14 abgezogen werden kann. Der Magnet 12 und der Schalter 11 bilden zusammen eine Zündschlüsselfreigabeeinrichtung, die mittels der Stelleinrichtung 6 und/oder des Sperrelements 7 betätigbar ist.

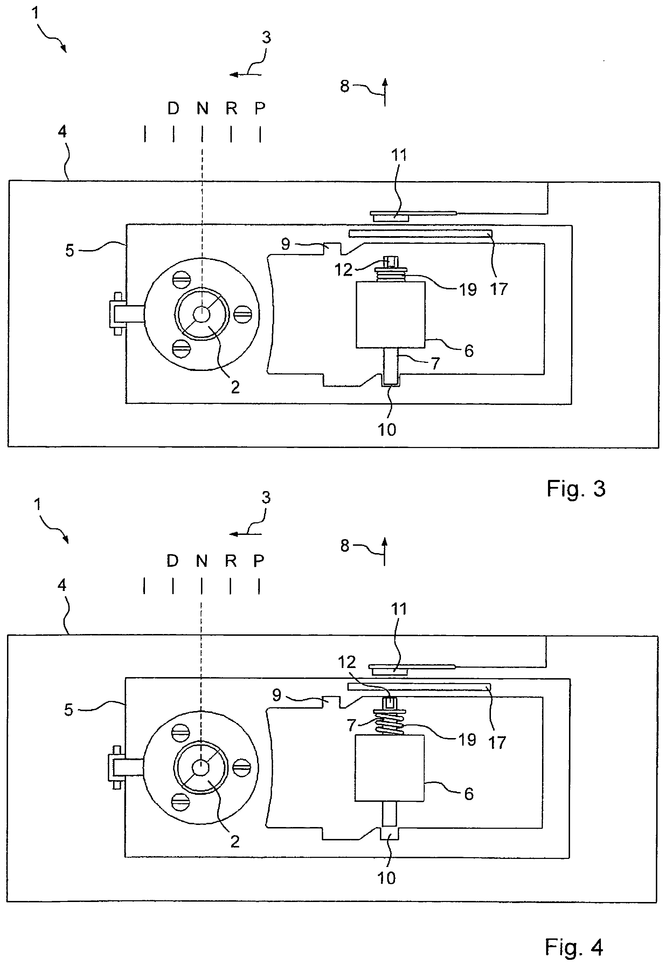

Gemäß Fig. 3 ist der Schalthebel 2 in die Schalthebelstellung N gestellt, in welcher der Schalthebel 2 mit der Halterung 4 verriegelt ist, da das Sperrelement 7 in die Verriegelungsausnehmung 10 eingerückt ist. Die Schalthebelstellung N bildet somit eine verriegelbare Schalthebelstellung des Schalthebels 2. Aus Fig. 4 ist der unverriegelte Zustand des Schalthebels 2 in der Schalthebelstellung N ersichtlich, wobei das Sperrelement 7 in die erste Sperrelementstellung gestellt ist. Gemäß Fig. 3 ist das Sperrelement 7 aber in die zweite Sperrelementstellung gestellt, sodass der Schalthebel 2 mit der Halterung 4 verriegelt ist.

In der Schalthebelstellung N ist zwischen dem Magneten 12 und dem magnetfeldempfindlichen Schalter 11 ein als Blech ausgebildetes Abschirmelement 17 aus ferromagnetischem Material angeordnet, welches den Schalter 11 von dem Magnetfeld des Magneten 12 abschirmt. Der Schalthebel 2 kann daher in der Schalthebelstellung N entriegelt werden, ohne dass der Schalter 11 geschlossen wird, sodass der Zündschlüssel 16 nicht von dem Zündschloss 14 abziehbar ist. Das Abschirmelement 17 ist starr mit dem Körper 5 verbunden und steht somit in Mitnahmeverbindung mit dem Schalthebel 2.

In den Schalthebelstellungen R und D ist der Schalthebel 2 nicht mittels des Sperrelements 7 mit Halterung 4 verriegelbar. Insbesondere ist diesen Schalthebelstellungen keine Verriegelungsausnehmung im Körper 5 zugeordnet. Die Schalthebelstellungen R und D bilden somit nicht verriegelbare Schalthebelstellungen des Schalthebels 2. Alternativ kann der Schalthebel 2 aber auch in der Schalthebelstellung R und/oder D mittels des Sperrelements 7 mit Halterung 4 verriegelbar sein.

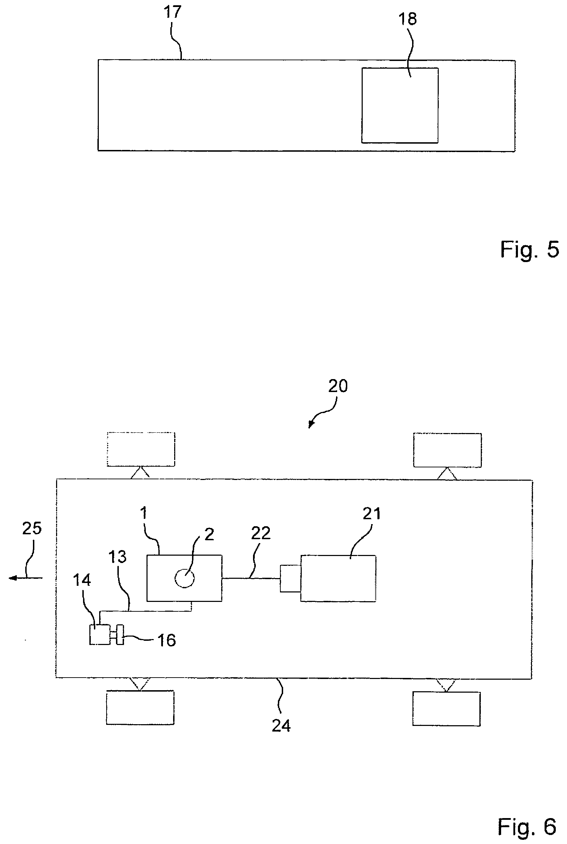

Aus Fig. 5 ist eine Abwandlung des Abschirmelements 17 ersichtlich, wobei in diesem ein durchgehendes Loch 18 vorgesehen ist, welches einen für das Magnetfeld des Magneten 12 durchlässigen Bereich bildet und einer weiteren Schalthebelstellung zugeordnet ist. Somit ist es möglich, in der weiteren Schalthebelstellung den Zündschlüssel 16 von dem Zündschloss 14 abzuziehen, wenn das Sperrelement 7 in die erste Sperrelementstellung gestellt ist.

Aus Fig. 6 ist in schematischer Draufsicht ein Kraftfahrzeug 20 mit der Schalthebelvorrichtung 1 und mit einem als Automatikgetriebe ausgebildeten Fahrzeuggetriebe 21 ersichtlich, welches über einen Seilzug 22 mit dem Körper 5 verbunden ist. Der Körper 5 weist dazu einen Anschluss 23 (siehe Fig. 1) auf, an welchem der Seilzug 22 befestigt ist. Das Getriebe 21 ist somit durch Bewegen des Schalthebels 2 betätigbar. Alternativ kann die aktuelle Schalthebelstellung des Schalthebels 2 auch mittels einer Abtastelektronik der Schalthebelvorrichtung 1 erfasst werden. In diesem Fall ist das Getriebe 21 über elektrische Leitungen mit der Abtastelektronik verbunden. Das Fahrzeug 20 umfasst einen Fahrzeugaufbau 24, an welchem die Halterung 4 starr festgelegt ist. Ferner ist die gewöhnliche Vorwärtsfahrtrichtung des Fahrzeugs 20 dargestellt und mit dem Bezugszeichen 25 gekennzeichnet.

### Bezugszeichen

- 1: Schalthebelvorrichtung
- 2: Schalthebel
- 3: Schaltrichtung
- 4: Halterung
- 5: Trägerkörper
- 6: Stelleinrichtung / Elektromagnet
- 7: Sperrelement
- 8: Sperrrichtung
- 9: Verriegelungsausnehmung
- 10: Verriegelungsausnehmung
- 11: magnetfeldempfindlicher Schalter / Reedkontakt
- 12: Permanentmagnet
- 13: elektrische Leitungen
- 14: Zündschloss
- 15: Zündschlüsselverriegelung
- 16: Zündschlüssel
- 17: Abschirmelement
- 18: Loch in Abschirmelement
- 19: Feder
- 20: Kraftfahrzeug
- 21: Fahrzeuggetriebe
- 22: Seilzug
- 23: Anschluss für Seilzug
- 24: Fahrzeugaufbau
- 25: Vorwärtsfahrtrichtung des Fahrzeugs

## Patentansprüche

1. Schalthebelvorrichtung zur Betätigung eines Fahrzeuggetriebes, mit einer Halterung (4), einem an der Halterung (4) bewegbar gelagerten und in vorgegebene Schalthebelstellungen (P, R, N, D) bewegbaren Schalthebel (2), die eine erste Schalthebelstellung (P) umfassen, einem in vorgegebene Sperrelementstellungen bewegbaren Sperrelement (7), die eine erste Sperrelementstellung umfassen, in welcher der Schalthebel (2) in der ersten Schalthebelstellung (P) mittels des Sperrelements (7) mit der Halterung (4) verriegelbar ist, und einer Freigabeeinrichtung, die einen magnetfeldempfindlichen Schalter (11) und einen Magneten (12) als Komponenten umfasst, deren Abstand zueinander durch Bewegen des Sperrelements (7) derart variierbar ist, dass in der ersten Schalthebelstellung (P) des Schalthebels (2) der Schalter (11) durch das Magnetfeld des Magneten (12) in der ersten Sperrelementstellung des Sperrelements (7) schaltbar ist, **gekennzeichnet durch** wenigstens ein zwischen dem Magneten (12) und dem Schalter (11) wenigstens manuell oder automatisch positionierbares und aus dieser Position verbringbares Abschirmelement (17), mittels welchem der Schalter (11) von dem Magnetfeld des Magneten (12) in wenigstens einer anderen Schalthebelstellung (N) der vorgegebenen Schalthebelstellungen (P, R, N, D) des Schalthebels (2) abschirmbar ist.

2. Schalthebelvorrichtung nach Anspruch 1, **dadurch gekennzeichnet, dass** das Abschirmelement (17) aus ferromagnetischem Material besteht.

3. Schalthebelvorrichtung nach Anspruch 1 oder 2, **dadurch gekennzeichnet, dass** das Abschirmelement (17) als Blech ausgebildet ist.

4. Schalthebelvorrichtung nach einem der vorangehenden Ansprüche, **dadurch gekennzeichnet, dass** das Abschirmelement (17) mit dem Schalthebel (2) verbunden und mittels diesem relativ zu der Halterung (4) bewegbar ist.

5. Schalthebelvorrichtung nach einem der vorangehenden Ansprüche, **dadurch gekennzeichnet, dass** der Magnet (12) an dem Sperrelement (7) und der Schalter (11) an der Halterung (4) vorgesehen ist.

6. Schalthebelvorrichtung nach einem der vorangehenden Ansprüche, **dadurch gekennzeichnet, dass** das Abschirmelement (17) in mehreren der Schalthebelstellungen (R, N, D) zwischen dem Magneten (12) und dem Schalter (11) positionierbar ist.

7. Schalthebelvorrichtung nach einem der vorangehenden Ansprüche, **dadurch gekennzeichnet, dass** das Abschirmelement (17) wenigstens einen, für das Magnetfeld des Magneten (12) durchlässigen Bereich (18) umfasst, der einer der Schalthebelstellungen zugeordnet ist, sodass in dieser Schalthebelstellung des Schalthebels (2) der Schalter (11) durch das Magnetfeld des Magneten (12) in der ersten Sperrelementstellung des Sperrelements (7) schaltbar ist.

8. Schalthebelvorrichtung nach einem der vorangehenden Ansprüche, **gekennzeichnet durch** eine Stelleinrichtung (6), mittels welcher das Sperrelement (7) in die unterschiedlichen Sperrelementstellungen bewegbar ist.

9. Schalthebelvorrichtung nach Anspruch 8, **dadurch gekennzeichnet, dass** die Stelleinrichtung (6) einen Elektromagneten umfasst, in dem das zumindest bereichsweise aus Magnetwerkstoff bestehende Sperrelement (7) verschiebbar einliegt.

10. Schalthebelvorrichtung nach einem der vorangehenden Ansprüche, **gekennzeichnet durch** ein Zündschloss (14) mit Zündschlüsselverriegelung (15), die mittels der Freigabeeinrichtung freigebbar ist.

## Claims

1. Gearshift lever device for the actuation of a vehicle gearbox, having a bracket (4), having a gearshift lever (2) which is mounted movably on the bracket (4) and which can be moved into predefined gearshift lever positions (P, R, N, D) which include a first gearshift lever position (P), having a blocking element (7) which can be moved into predefined blocking element positions which include a first blocking element position in which the gearshift lever (2) can be locked to the bracket (4) in the first gearshift lever position (P) by way of the blocking element (7), and having a release device which comprises, as components, a magnetic field-sensitive switch (11) and a magnet (12), the spacing of which to one another can, by movement of the blocking element (7), be varied such that, in the first gearshift lever position (P) of the gearshift lever (2), the switch (11) can be switched by way of the magnetic field of the magnet (12) in the first blocking element position of the blocking element (7), **characterized by** at least one shielding element (17) which can be at least manually or automatically positioned between the magnet (12) and the switch (11) and which can be moved out of said position and by means of which the switch (11) can be shielded from the magnetic field of the magnet (12) in at least one other gearshift lever position (N) of the predefined gearshift lever positions (P, R, N, D) of the gearshift lever (2).

2. Gearshift lever device according to Claim 1, **characterized in that** the shielding element (17) is composed of ferromagnetic material.

3. Gearshift lever device according to Claim 1 or 2, **characterized in that** the shielding element (17) is formed as a metal plate.

4. Gearshift lever device according to one of the preceding claims, **characterized in that** the shielding element (17) is connected to the gearshift lever (2) and is movable relative to the bracket (4) by way of said gearshift lever.

5. Gearshift lever device according to one of the preceding claims, **characterized in that** the magnet (12) is provided on the blocking element (7), and the switch (11) is provided on the bracket (4).

6. Gearshift lever device according to one of the preceding claims, **characterized in that** the shielding element (17) can be positioned between the magnet (12) and the switch (11) in several of the gearshift lever positions (R, N, D).

7. Gearshift lever device according to one of the preceding claims, **characterized in that** the shielding element (17) comprises at least one region (18) which is permeable to the magnetic field of the magnet (12) and which is assigned to one of the gearshift lever positions, such that, in said gearshift lever position of the gearshift lever (2), the switch (11) can be switched by the magnetic field of the magnet (12) in the first blocking element position of the blocking element (7).

8. Gearshift lever device according to one of the preceding claims, **characterized by** an actuating device (6) by means of which the blocking element (7) can be moved into the different locking element positions.

9. Gearshift lever device according to Claim 8, **characterized in that** the actuating device (6) comprises an electromagnet in which the blocking element (7), which is at least regionally composed of magnetic material, is situated in displaceable fashion.

10. Gearshift lever device according to one of the preceding claims, **characterized by** an ignition switch (14) with ignition key locking means (15) which can be released by way of the release device.

## Revendications

1. Dispositif de levier de changement de vitesse pour actionner une boîte de vitesses, comprenant une fixation (4), un levier de changement de vitesse (2) supporté de manière déplaçable sur la fixation (4) et déplaçable dans des positions de levier de changement de vitesse prédéfinies (P, R, N, D), qui comprennent une première position de levier de changement de vitesse (P), un élément de blocage (7) déplaçable dans des positions d'élément de blocage prédéfinies, qui comprennent une première position d'élément de blocage dans laquelle le levier de changement de vitesse (2) peut être verrouillé dans la première position de levier de changement de vitesse (P) à la fixation (4) au moyen de l'élément de blocage (7), et une position de libération qui comprend en tant que composants un commutateur sensible aux champs magnétiques (11) et un aimant (12), dont l'espacement l'un de l'autre peut être modifié par déplacement de l'élément de blocage (7), de telle sorte que dans la première position de levier de changement de vitesse (P) du levier de changement de vitesse (2), le commutateur (11) puisse être commuté par le champ magnétique de l'aimant (12) dans la première position d'élément de blocage de l'élément de blocage (7), **caractérisé par** au moins un élément de blindage (17) pouvant être positionné au moins manuellement ou automatiquement entre l'aimant (12) et le commutateur (11) et pouvant être déplacé hors de cette position, au moyen duquel le commutateur (11) peut être protégé du champ magnétique de l'aimant (12) dans au moins une autre position de levier de changement de vitesse (N) parmi les positions de levier de changement de vitesse prédéfinies (P, R, N, D) du levier de changement de vitesse (2).

2. Dispositif de levier de changement de vitesse selon la revendication 1, **caractérisé en ce que** l'élément de blindage (17) se compose d'un matériau ferromagnétique.

3. Dispositif de levier de changement de vitesse selon la revendication 1 ou 2, **caractérisé en ce que** l'élément de blindage (17) se compose de tôle.

4. Dispositif de levier de changement de vitesse selon l'une quelconque des revendications précédentes, **caractérisé en ce que** l'élément de blindage (17) est connecté au levier de changement de vitesse (2) et peut être déplacé au moyen de celui-ci par rapport à la fixation (4).

5. Dispositif de levier de changement de vitesse selon l'une quelconque des revendications précédentes, **caractérisé en ce que** l'aimant (12) est prévu au niveau de l'élément de blocage (7) et le commutateur (11) est prévu au niveau de la fixation (4).

6. Dispositif de levier de changement de vitesse selon l'une quelconque des revendications précédentes, **caractérisé en ce que** l'élément de blindage (17) peut être positionné dans plusieurs des positions de levier de changement de vitesse (R, N, D) entre l'aimant (12) et le commutateur (11).

7. Dispositif de levier de changement de vitesse selon l'une quelconque des revendications précédentes, **caractérisé en ce que** l'élément de blindage (17) comprend au moins une région (18) laissant passer le champ magnétique de l'aimant (12), laquelle est associée à l'une des positions de levier de changement de vitesse, de telle sorte que dans cette position de levier de changement de vitesse du levier de changement de vitesse (2), le commutateur (11) puisse être commuté par le champ magnétique de l'aimant (12) dans la première position d'élément de blocage de l'élément de blocage (7).

8. Dispositif de levier de changement de vitesse selon l'une quelconque des revendications précédentes, **caractérisé par** un dispositif de commande (6) au moyen duquel l'élément de blocage (7) peut être déplacé dans les différentes positions d'élément de blocage.

9. Dispositif de levier de changement de vitesse selon la revendication 8, **caractérisé en ce que** le dispositif de commande (6) comprend un électroaimant dans lequel est logé de manière déplaçable l'élément de blocage (7) se composant au moins en partie d'un matériau magnétique.

10. Dispositif de levier de changement de vitesse selon l'une quelconque des revendications précédentes, **caractérisé par** une serrure de contact (14) avec un verrouillage de clé de contact (15) qui peut être libéré au moyen du dispositif de libération.
